# EUROPEAN PATENT SPECIFICATION

(11) **EP 3 393 072 B1**
(45) Date of publication and mention of the grant of the patent: **09.03.2022**
(21) Application number: 17738197.7
(22) Date of filing: 13.01.2017
(51) Int. Cl.: H04L 5/14, H04L 5/00, H04B 7/26, H04L 27/26, H04W 72/04

(54) **WIRELESS FRAME TRANSMISSION METHOD AND WIRELESS NETWORK DEVICE**
VERFAHREN ZUR DRAHTLOSEN RAHMENÜBERTRAGUNG UND DRAHTLOSNETZWERKVORRICHTUNG
PROCÉDÉ DE TRANSMISSION DE TRAME SANS FIL ET DISPOSITIF DE RÉSEAU SANS FIL

(30) Priority: 15.01.2016 CN 201610028038
(43) Date of publication of application: 24.10.2018
(73) Proprietor: Huawei Technologies Co., Ltd., Longgang District Shenzhen, Guangdong 518129 (CN)
(72) Inventor: LI, Yuanjie, Shenzhen Guangdong 518129 (CN); TENGQVIST, Per, Shenzhen Guangdong 518129 (CN); SIHLBOM, Björn, Shenzhen Guangdong 518129 (CN)
(74) Representative: Maiwald Patent- und Rechtsanwaltsgesellschaft mbH
(86) International application number: PCT/CN2017/071133
(87) International publication number: WO 2017/121384

(56) References cited:
- EP-A1- 2 408 162
- WO-A1-2013/170415
- WO-A1-2015/172830
- CN-A- 101 931 456
- CN-A- 104 348 602
- CN-A- 104 737 489
- US-A1- 2013 194 980
- CATT: "System Analysis on TTI Shortening", 3GPP DRAFT; R1-156613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, CA, USA; 20151115 - 20151122 15 November 2015 (2015-11-15), XP051039895, Retrieved from the Internet: URL:http://www.3gpp.org/ftp/Meetings_3GPP_ SYNC/RAN1/Docs/ [retrieved on 2015-11-15]
- CATR: 'CONSIDERATIONS ON ADDITIONAL SPECIAL SUBFRAME CONFIGURATION FOR LTE TDD' 3GPP TSG RAN WG1 MEETING #68BIS, R1-121696 20 March 2012, XP050599957
- HUAWEI: 'INCREASING SRS CAPACITY TO SUPPORT UL MIMO' 3GPPTSG RAN WG1 MEETING #59, R1-094707 13 November 2009, XP050389107

## Description

### TECHNICAL FIELD

The present invention relates to the field of wireless communications technologies, and in particular, to a radio frame transmission method and a wireless network device.

### BACKGROUND

With the evolution of wireless communications technologies, an important feature of a future 5G (the 5th generation mobile communications technology) system is adoption of more transmission antennas. An example is a distributed MIMO (Multiple-Input Multiple-Output, multiple-input multiple-output) system based on multi-cell coordination, or a massive MIMO system based on a large-scale antenna group. During downlink data transmission, performance of MIMO transmission depends on obtaining of a downlink channel state. That is, timelier obtaining of the downlink channel state leads to higher performance of MIMO transmission.

In a TDD (Time Division Duplexing, Time Division Duplex) system, an uplink channel and a downlink channel use a same frequency, that is, the uplink channel and the downlink channel are reciprocal, and the downlink channel state may be obtained by sending an uplink sounding signal (sounding signal). It should be understood that a shorter sounding signal sending interval indicates timelier obtaining of a channel state by a base station. However, the sounding signal sending interval in the current TDD system is relatively long, and the channel state obtained by the base station is not timely.

"System Analysis on TTI Shortening", 3GPP DRAFT; R1-156613, 3rd GENERATION PARTNERSHIP PROJECT (3GPP), MOBILE COMPETENCE CENTRE; 650, ROUTE DES LUCIOLES; F-06921 SOPHIA-ANTIPOLIS DEDEX; FRANCE, vol. RAN WG1, no. Anaheim, CA, USA; 20151115 - 20151122 15 November 2015 (2015-11-15), XP051039895, relates to a preliminary system analysis of the enhanced frame structure and DL/UL control channels and RS in supporting of shorten TTI for latency reduction. The paper provides a performance evaluation of latency reduction.

US 2013/194980 A1 discloses a user equipment (UE) for reconfiguring uplink and downlink (UL-DL) allocations. The user UE determines whether at least one subframe is convertible over a default Time Domain Duplexing (TDD) UL-DL configuration.

WO 2015/172830 A1 discloses a method for transmitting and/or receiving reference signals. The method comprises causing a user equipment to transmit a first reference signal to a base station using a frequency band, which is used by said base station to transmit to said user equipment, said user equipment having different frequency band for transmitting to said base station.

### SUMMARY

Embodiments of the present invention provide a radio frame transmission method and a wireless network device according to the appended independent claims, to increase a quantity of subframes used for uplink transmission in a
radio frame, thereby increasing subframes that carry a sounding signal, reducing a sounding signal sending interval, and making obtaining of a channel state by a base station timelier.

### BRIEF DESCRIPTION OF DRAWINGS

FIG. 1 is a diagram of an application scenario of a communications system according to an embodiment of the present invention;
FIG. 2 is a schematic structural diagram of a prior-art radio frame according to an embodiment of the present invention;
FIG. 3 is a schematic flowchart of a radio frame transmission method according to an embodiment of the present invention;
FIG. 4 is a schematic flowchart of another radio frame transmission method according to an embodiment of the present invention;
FIG. 5 is a schematic structural diagram of a radio frame according to an embodiment of the present invention;
FIG. 6 is a schematic structural diagram of a wireless network device according to an embodiment of the present invention; and
FIG. 7 is a schematic structural diagram of another wireless network device according to an embodiment of the present invention.

### DESCRIPTION OF EMBODIMENTS

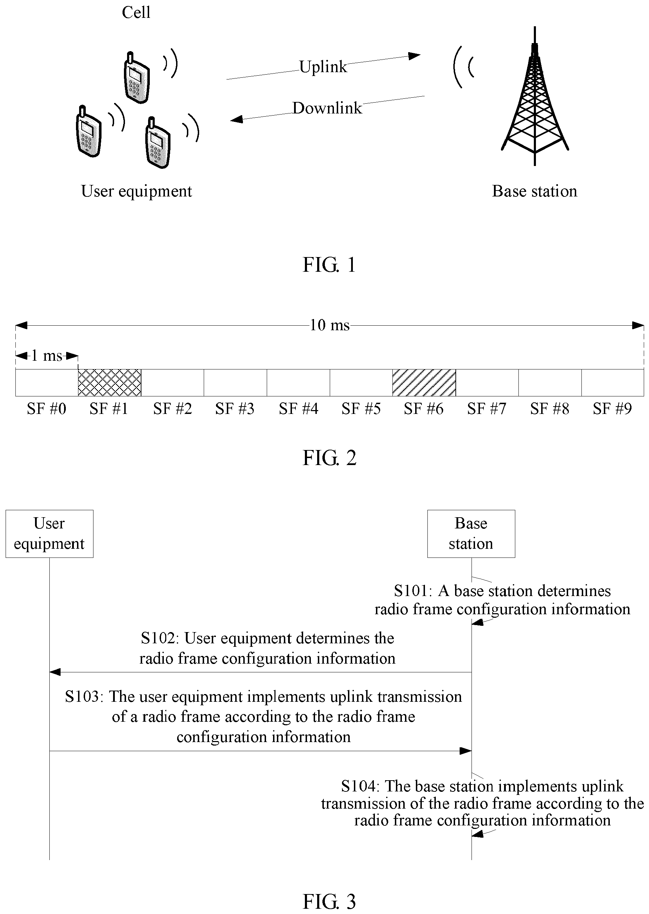

Technical solutions in the embodiments of the present invention may be applied to various communications systems, such as a TDD system of LTE (Long Term Evolution, Long Term Evolution), a distributed MIMO system based on multi-cell coordination or a massive MIMO system based on a large-scale antenna group, a future evolved 5G (the 5th Generation, the 5th Generation mobile communications) system, an M2M (Machine to Machine, machine-to-machine) system, a D2D (Device to Device, device-to-device) system, or a multi-base-station coordination system. FIG. 1 is a diagram of an application scenario simplified for the various communications systems according to an embodiment of the present invention. As shown in the figure, at least a base station and a plurality of user equipments that are located in a same cell are included. Sending a message to the base station by user equipment is referred to as uplink transmission, and sending a message to user equipment by the base station is referred to as downlink transmission. A transmission path between user equipment and the base station is referred to as a channel, including an uplink channel or a downlink channel. The uplink channel and the downlink channel are reciprocal. Therefore, a state of the downlink channel may be obtained by sending a sounding signal (sounding signal) to the base station by the user equipment in the same cell.

In the embodiments of the present invention, various aspects are described with reference to a wireless network device. The wireless network device may be a base station. The base station may be configured to communicate with one or more user equipments, or may be configured to communicate with one or more base stations that have some user equipment functions (for example, communication between a macro base station and a micro base station, such as an access point). The base station may be a BTS (Base Transceiver Station, base transceiver station) in TD-SCDMA (Time Division Synchronous Code Division Multiple Access, Time Division-Synchronous Code Division Multiple Access), an eNB (Evolutional Node B, evolved NodeB) in LTE, or a base station in a future network. The wireless network device may alternatively be user equipment. The user equipment may be configured to communicate with one or more user equipments (for example, D2D communication), or may be configured to communicate with one or more base stations. The user equipment may also be referred to as a user terminal, and may include some or all functions of a system, a subscriber unit, a subscriber station, a mobile station, a mobile wireless terminal, a mobile device, a node, a device, a remote station, a remote terminal, a terminal, a wireless communications device, a wireless communications apparatus, or a user agent. The user equipment may be a cellular phone, a cordless telephone set, a SIP (Session Initiation Protocol, Session Initiation Protocol) phone, a smart phone, a WLL (wireless local loop, wireless local loop) station, a PDA (Personal Digital Assistant, personal digital assistant), a laptop computer, a handheld communications device, a handheld computing device, a satellite wireless device, a wireless modem card, and/or another processing device configured for communication in a wireless system. In addition, the base station may also be referred to as an access point, a node, or another network entity, and may include some or all functions of these network entities. The base station may communicate with a wireless terminal by using an air interface. The communication may be implemented by using one or more sectors. The base station may further coordinate management of air interface properties, and may further be a gateway between a wired network and a wireless network. The embodiments of the present invention are described by using communication between a base station and user equipment as an example. It may be understood that the embodiments of the present invention may be applied to communication between a first wireless network device and a second wireless network device, for example, communication between a base station and user equipment, communication between a base station and another base station, or communication between user equipment and another user equipment. The following uses the communication between a base station and user equipment as an example for description.

Terms such as "module" used in the embodiments of the present invention are intended to indicate computer-related entities, and the computer-related entity may be hardware, firmware, a combination of hardware and software, software, or software being executed. For example, a component may be, but is not limited to, a process that runs on a processor, a processor, an object, an executable file, a thread of execution, a program, and/or a computer. In an example, an application that runs on a computing device and the computing device may both be components. One or more components may reside within a process and/or a thread of execution, and a component may be located on one computer and/or distributed to two or more computers. In addition, these components can be executed in various computer-readable media that have various data structures. These components may communicate by using a local and/or remote process and according to, for example, a signal having one or more data packets (for example, data from one component, where the component interacts, by using a signal, with another component in a local system or a distributed system, and/or interacts with another system across a network such as the Internet).

In the embodiments of the present invention, various aspects, embodiments, or features are demonstrated based on a system that can include a plurality of devices, modules, or the like. It should be understood that the system may include an additional device, component, module, or the like, and/or may not include all devices, components, modules, or the like discussed with reference to the accompanying drawings. In addition, a combination of these solutions may also be used.

In the embodiments of the present invention, information (information), signal (signal), message (message), channel (channel) may sometimes be used interchangeably. It should be noted that they express a same meaning when their differences are not emphasized, "of (of)", "corresponding (corresponding, relevant)", and "corresponding (corresponding)" may sometimes be used interchangeably. It should be noted that they express a same meaning when their differences are not emphasized.

A network architecture and a service scenario described in the embodiments of the present invention are intended for clearer description of the technical solutions in the embodiments of the present invention, and do not constitute any limitation on the technical solutions provided in the embodiments of the present invention. A person of ordinary skill in the art may understand that with the evolution of the network architecture and the emergence of a new service scenario, the technical solutions provided in the embodiments of the present invention are still applicable to a similar technical issue.

The embodiments of the present invention may be applied to both a time division duplex (Time Division Duplexing, TDD) scenario and a frequency division duplex (Frequency Division Duplexing, FDD) scenario.

The embodiments of the present invention are described based on the TDD scenario in a wireless communications network. It should be noted that the solutions in the embodiments of the present invention may also be applied to another wireless communications network, and a corresponding name may also be replaced by a name of a corresponding function in the another wireless communications network. For ease of understanding the technical solutions in the embodiments of the present invention, a radio frame (radio frame) specified in a prior wireless communications protocol standard is introduced herein. Referring to FIG. 2, each radio frame is 10 milliseconds in duration, and includes 10 one-millisecond subframes (subframe), as shown by SF #0 to SF #9 in the figure. By function, subframes in a radio frame are categorized into uplink subframes, downlink subframes, and special subframes. An uplink subframe is used to carry uplink data information or signaling information, a downlink subframe is used to carry downlink data information or signaling information, and a special subframe may be used to carry uplink data information or signaling information or carry downlink data information or signaling information. The prior wireless communications protocol standard further specifies that the second subframe (SF #1) of each radio frame is fixedly a special subframe, the seventh subframe (SF #6) may be a special subframe, and the other subframes may be set to uplink subframes or downlink subframes according to different configurations. For example, referring to Table 1, Table 1 shows different configurations of a structure of a radio frame, where U indicates an uplink subframe, D indicates a downlink subframe, and S indicates a special subframe. It should be noted that, a sounding signal relies on a manner of uplink transmission from user equipment to a base station, and therefore, the sounding signal can be sent only in the uplink subframe and the special subframe. It can be learned that in a prior-art radio frame, relatively few subframes can send the sounding signal. Consequently, a sending interval is limited, and timely obtaining of a downlink channel state is difficult to be implemented.

**Table 1**

| **Configuration number** | **Subframe number** | | | | | | | | | |
|---|---|---|---|---|---|---|---|---|---|---|
| | **0** | **1** | **2** | **3** | **4** | **5** | **6** | **7** | **8** | **9** |
| **0** | D | S | U | U | U | D | S | U | U | U |
| **1** | D | S | U | U | D | D | S | U | U | D |
| **2** | D | S | U | D | D | D | S | U | D | D |
| **3** | D | S | U | U | U | D | D | D | D | D |
| **4** | D | S | U | U | D | D | D | D | D | D |
| **5** | D | S | U | D | D | D | D | D | D | D |
| **6** | D | S | U | U | U | D | S | U | U | D |

FIG. 3 is a schematic flowchart of a radio frame transmission method according to an embodiment of the present invention. As shown in the figure, a procedure of the radio frame transmission method in this embodiment may include the following steps.

S101: Abase station determines radio frame configuration information.

The radio frame configuration information is used to indicate subframe types respectively allocated to 10 subframes in a radio frame, where the subframe types include uplink subframe, downlink subframe, and special subframe. The radio frame configuration information is generated during radio frame configuration.

Specifically, the base station obtains the radio frame configuration information generated during radio frame configuration, and sends the radio frame configuration information to user equipment. Optionally, the base station sends the radio frame configuration information to the user equipment by using a system message or higher layer signaling. For example, the radio frame configuration information is carried in a SIB1 message in a broadcast message.

S102: User equipment determines the radio frame configuration information.

Specifically, the user equipment receives the radio frame configuration information sent by the base station. Correspondingly, the radio frame configuration information may be notified by using the system message or the higher layer signaling. In a specific implementation process, the user equipment receives the radio frame configuration information that is sent by the base station by using the system message or the higher layer signaling.

S103: The user equipment implements uplink transmission of a radio frame according to the radio frame configuration information.

Specifically, the user equipment sends the radio frame to the base station according to the radio frame configuration information.

In an optional implementation, the radio frame sent according to the radio frame configuration information by the user equipment includes at least three special subframes. It can be learned from the foregoing that the second subframe of a prior-art radio frame is fixedly a special subframe, and the seventh subframe may be a special subframe. In other words, there are a maximum of two special subframes. However, the radio frame in this implementation includes at least three special subframes. In a specific implementation process, the second and the seventh subframes in the radio frame sent by the user equipment are the special subframes. The third, the fourth, the fifth, the eighth, the ninth, and the tenth subframes in the radio frame are uplink subframes, and the first and/or the sixth subframes/subframe are/is the special subframes/subframe; or the third, the fourth, the eighth, and the ninth subframes in the radio frame are uplink subframes, and at least one of the first, the fifth, the sixth, or the tenth subframe is the special subframe; or the third and the eighth subframes in the radio frame are uplink subframes, and at least one of the first, the fourth, the fifth, the sixth, the ninth, or the tenth subframe is the special subframe; or the third, the fourth, the fifth, the eighth, and the ninth subframes in the radio frame are uplink subframes, and at least one of the first, the sixth, or the tenth subframe is the special subframe.

It should be noted that, it can be learned from a comparison with Table 1 that the foregoing implementation may be understood as replacing some or all downlink subframes in prior-art radio frames whose configuration numbers are 0, 1, 2, or 6 with special subframes. Because a special subframe may be used for both uplink transmission and downlink transmission, an uplink transmission capability is improved while a downlink transmission capability is retained in this implementation. Further, to maximize the uplink transmission capability, all downlink subframes in the prior-art radio frames whose configuration numbers are 0, 1, 2, or 6 may be replaced by special subframes to obtain four types of radio frames whose configuration numbers are 7, 8, 9, and 10, as shown in Table 2.

**Table 2**

| **Configuration number** | **Subframe number** | | | | | | | | | |
|---|---|---|---|---|---|---|---|---|---|---|
| | **0** | **1** | **2** | **3** | **4** | **5** | **6** | **7** | **8** | **9** |
| **7** | S | S | U | U | U | S | S | U | U | U |
| **8** | S | S | U | U | S | S | S | U | U | S |
| **9** | S | S | U | S | S | S | S | U | S | S |
| **10** | S | S | U | U | U | S | S | U | U | S |

It can be learned that in the four types of radio frames whose configuration numbers are 7, 8, 9, and 10, every subframe can be used for uplink transmission. This means that an uplink transmission interval may be reduced to 1 ms.

In another optional implementation, the second subframe in the radio frame sent according to the radio frame configuration information by the user equipment is a special subframe. Only the third, the fourth, and the fifth subframes in the radio frame are uplink subframes, and at least one of the first, the sixth, the seventh, the eighth, the ninth, or the tenth subframe is the special subframe; or only the third and the fourth subframes in the radio frame are uplink subframes, and at least one of the first, the fifth, the sixth, the seventh, the eighth, the ninth, or the tenth subframe is the special subframe; or only the third subframe in the radio frame is an uplink subframe, and at least one of the first, the fourth, the fifth, the sixth, the seventh, the eighth, the ninth, or the tenth subframe is the special subframe.

Similarly, it can be learned from a comparison with Table 1 that this implementation may be understood as replacing some or all downlink subframes in prior-art radio frames whose configuration numbers are 3, 4, or 5 with special subframes. Correspondingly, to maximize the uplink transmission capability, all downlink subframes in the prior-art radio frames whose configuration numbers are 3, 4, or 5 may be replaced by special subframes to obtain three types of radio frames whose configuration numbers are 11, 12, and 13, as shown in Table 3.

**Table 3**

| **Configuration number** | **Subframe number** | | | | | | | | | |
|---|---|---|---|---|---|---|---|---|---|---|
| | **0** | **1** | **2** | **3** | **4** | **5** | **6** | **7** | **8** | **9** |
| **11** | S | S | U | U | U | S | S | S | S | S |
| **12** | S | S | U | U | S | S | S | S | S | S |
| **13** | S | S | U | S | S | S | S | S | S | S |

It can be learned that in the three types of radio frames whose configuration numbers are 11, 12, and 13, every subframe can be used for uplink transmission. This means that an uplink transmission interval may be reduced to 1 ms.

It should be noted that neither the first implementation nor the second implementation changes the structure of the prior-art radio frame (for example, duration and a subframe quantity of the radio frame). The radio frame can be fully compatible with current communications protocols, and therefore feasibility is good.

It should be understood that a special subframe includes a downlink pilot timeslot (Downlink Pilot Time Slot, DwPTS), a guard period (GP), and an uplink pilot timeslot (Uplink Pilot Time Slot, UpPTS). The DwPTS, the GP, and the UpPTS are arranged sequentially. The DwPTS is used for downlink transmission, and the UpPTS is used for uplink transmission. It is obvious that the special subframe can be used for both uplink transmission and downlink transmission. Different from the prior-art radio frame, configurations of the special subframes in the radio frame in this embodiment of the present invention may be different. That is, the special subframes in the radio frame may have at least two different configurations. The configuration of the special subframe reflects a quantity of DwPTSs and a quantity of UpPTSs in the special subframe. Table 4 or 5 shows configurations specified in the prior communications protocol.

**Table 4**

| **Configuration** | **Normal cyclic prefix** | | **Extended cyclic prefix** | |
|---|---|---|---|---|
| | **DwPTS** | **UpPTS** | **DwPTS** | **UpPTS** |
| **0** | 3 | 1 | 3 | 1 |
| **1** | 9 | 1 | 9 | 1 |
| **2** | 10 | 1 | 10 | 1 |
| **3** | 11 | 1 | 12 | 1 |
| **4** | 12 | 1 | 3 | 2 |
| **5** | 2 | 2 | 9 | 2 |
| **6** | 9 | 2 | 10 | 2 |
| **7** | 10 | 2 | 5 | 2 |
| **8** | 11 | 2 | - | - |
| **9** | 6 | 2 | - | - |

**Table 5**

| **Configuration** | **Normal cyclic prefix** | | **Extended cyclic prefix** | |
|---|---|---|---|---|
| | **DwPTS** | **UpPTS** | **DwPTS** | **UpPTS** |
| **0** | 2 | 1 | 3 | 1 |
| **1** | 7 | 1 | 8 | 1 |
| **2** | 8 | 1 | 9 | 1 |
| **3** | 9 | 1 | 10 | 1 |
| **4** | 10 | 1 | 3 | 2 |
| **5** | 2 | 2 | 8 | 2 |
| **6** | 7 | 2 | 9 | 2 |
| **7** | 8 | 2 | 5 | 2 |
| **8** | 9 | 2 | - | - |
| **9** | 5 | 2 | - | - |

Further optionally, for the first implementation, the second and the seventh subframes in the radio frame are special subframes of one configuration, and a special subframe other than the second and the seventh subframes in the radio frame is a special subframe of another configuration. For example, the second and the seventh subframes in the radio frame are special subframes corresponding to configuration 1 in Table 4, and the other special subframe is a special subframe corresponding to configuration 6 in Table 4. For the second implementation, the second subframe in the radio frame is a special subframe of one configuration, and a special subframe other than the second subframe in the radio frame is a special subframe of another configuration. For example, the second subframe in the radio frame is a special subframe corresponding to configuration 1 in Table 4, and the other special subframe is a special subframe corresponding to configuration 6 in Table 4.

Still further, for the first implementation, a configuration of the special subframe other than the second and the seventh subframes in the radio frame is configuration 4 in Table 4, that is, the other special subframe includes 12 DwPTSs and one UpPTS. For the second implementation, a configuration of the special subframe other than the second subframe in the radio frame is configuration 4 in Table 4, that is, the other special subframe includes 12 DwPTSs and one UpPTS. It should be understood that a larger quantity of special subframes in a radio frame means a smaller quantity of downlink subframes in the radio frame. This causes a loss to downlink transmission. It can be learned from analysis of Table 4 and Table 5 that configuration 4 in Table 4 includes the largest quantity of DwPTSs, so that most timeslots of the special subframe are still used for downlink transmission, ensuring a minimum loss of downlink transmission.

Optionally, for the first implementation, the configuration of the special subframe other than the second and the seventh subframes in the radio frame is predefined, or is configured by using a system message or higher layer signaling, or is configured by using radio resource control layer signaling (Radio Resource Control, RRC). For the second implementation, the configuration of the special subframe other than the second subframe in the radio frame is predefined, or is configured by using a system message or higher layer signaling, or is configured by using radio resource control layer signaling. Optionally, a specific implementation of configuring the configuration of the special subframe other than the second subframe in the radio frame by using the system message or the higher layer signaling, or by using the radio resource control layer signaling may be as follows: The base station sends information reflecting the configuration of the special subframe other than the second subframe in the radio frame to the user equipment by using the system message or the higher layer signaling, or by using the radio resource control layer signaling, and the user equipment receives the information and determines the configuration.

S104: The base station implements uplink transmission of the radio frame according to the radio frame configuration information.

Specifically, the base station receives the radio frame sent according to the radio frame configuration information by the user equipment.

Optionally, at least one special subframe in the radio frame carries a sounding signal. Still optionally, at least one uplink subframe in the radio frame carries a sounding signal. Correspondingly, after receiving a radio frame sent according to the radio frame configuration information by the user equipment, the base station obtains a downlink channel state according to the sounding signal carried in the radio frame. It can be learned that in this embodiment of the present invention, a quantity of subframes in which a sounding signal can be sent in the radio frame increases compared with that in a prior-art radio frame. This reduces a sounding signal sending interval, makes obtaining of the downlink channel state timelier, and therefore improves performance of radio transmission.

It should be noted that, for a case in which the radio frame includes only uplink subframes and special subframes, as shown in Table 2 and Table 3, the sounding signal sending interval may reach 1 ms. It should be understood that a shortest sounding signal sending interval in TDD is 5 ms, and that a shortest sounding signal sending interval in FDD is less than 5 ms. It can be learned that a configuration in FDD may even be used for configuration of the sending interval and an offset of the sounding signal.

For example, Table 6 shows a configuration in FDD, where I indicates an index number, and a value of the offset is used to indicate a subframe number increment of a start subframe that carries a sounding signal, relative to the first subframe. It is assumed that a configuration whose index number is 0 is used, that the sounding signal sending interval is 2 ms, and that the offset is 0. Then, the base station receives, every 2 ms starting from the first subframe in the radio frame, a sounding signal sent by the user equipment. It is assumed that a configuration whose index number is 3 is used, that the sounding signal sending interval is 5 ms, and that the offset is 1 (= 3 - 2). Then, the base station receives, every 5 ms starting from the second subframe in the radio frame, a sounding signal sent by the user equipment.

**Table 6**

| **Index number (I)** | **Sending interval (ms)** | **Offset** |
|---|---|---|
| **0-1** | 2 | I |
| **2-6** | 5 | I-2 |
| **7-16** | 10 | I-7 |
| **17-36** | 20 | I-17 |
| **37-76** | 40 | I-37 |
| **77-156** | 80 | I-77 |
| **157-316** | 160 | I-157 |
| **317-636** | 320 | I-317 |
| **637-1023** | - | - |

For another example, Table 7 shows another configuration in FDD. Similarly, I indicates an index number, and a value of the offset is used to indicate a subframe number increment of a start subframe that carries a sounding signal, relative to the first subframe. It is assumed that a configuration whose index number is 1 is used, that the sounding signal sending interval is 2 ms, and that the offset is 1. Then, the base station receives, every 2 ms starting from the second subframe in the radio frame, a sounding signal sent by the user equipment. It is assumed that a configuration whose index number is 4 is used, that the sounding signal sending interval is 5 ms, and that the offset is 2 (= 4 - 2). Then, the base station receives, every 5 ms starting from the third subframe in the radio frame, a sounding signal sent by the user equipment.

**Table 7**

| **Index number (I)** | **Sending interval (ms)** | **Offset** |
|---|---|---|
| **0-1** | 2 | I |
| **2-6** | 5 | I-2 |
| **7-16** | 10 | I-7 |
| **17-31** | - | - |

It can be learned from the foregoing that, in this embodiment of the present invention, the user equipment and the base station implement transmission of the radio frame, and the radio frame includes at least three special subframes, or the radio frame includes at least two special subframes. In this way, a quantity of subframes used for uplink transmission can be increased in the radio frame, and the sounding signal sending interval can be reduced. This makes obtaining of the downlink channel state timelier, and therefore improves performance of radio transmission.

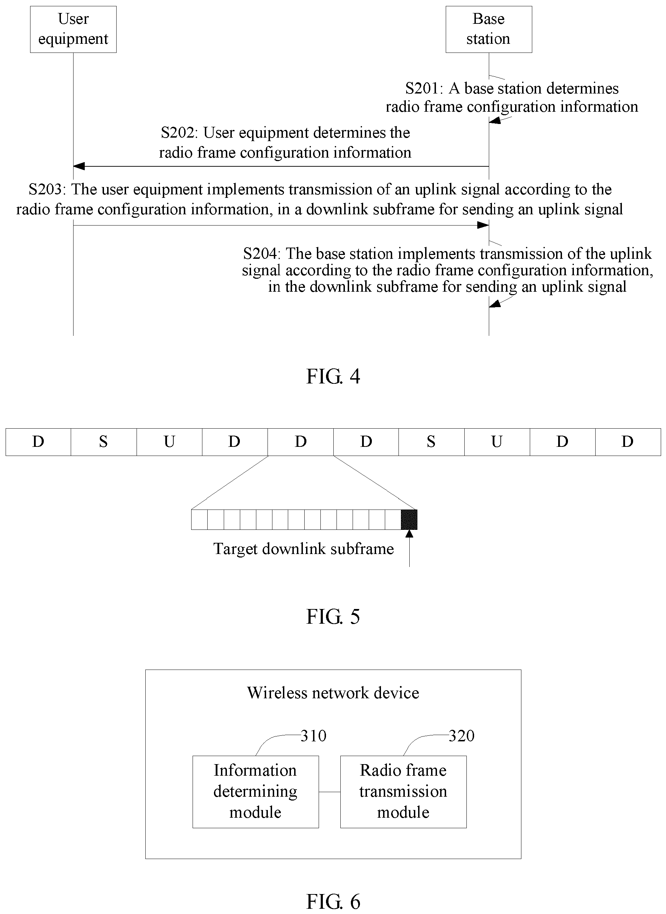

FIG. 4 is a schematic flowchart of another radio frame transmission method according to an embodiment of the present invention. As shown in the figure, a procedure of the radio frame transmission method in this embodiment may include the following steps.

S201: A base station determines radio frame configuration information.

The radio frame configuration information is information that records subframe types respectively allocated to 10 subframes in a radio frame, where the subframe types include uplink subframe, downlink subframe, and special subframe. The radio frame configuration information further includes information that indicates a downlink subframe for uplink signal sending, and the radio frame configuration information is generated during radio frame configuration.

Specifically, the base station obtains the radio frame configuration information generated during radio frame configuration, and sends the radio frame configuration information to user equipment. Optionally, the base station sends the radio frame configuration information to the user equipment by using a system message or higher layer signaling. For example, the radio frame configuration information is carried in a SIB1 message in a broadcast message.

S202: User equipment determines the radio frame configuration information.

Specifically, the user equipment receives the radio frame configuration information sent by the base station. Correspondingly, the radio frame configuration information may be notified by using the system message or the higher layer signaling. In a specific implementation process, the user equipment receives the radio frame configuration information that is sent by the base station by using the system message or the higher layer signaling.

S203: The user equipment implements transmission of an uplink signal according to the radio frame configuration information, in a downlink subframe for uplink signal sending. Specifically, the user equipment sends the uplink signal to the base station according to the radio frame configuration information, in the downlink subframe for uplink signal sending.

It should be understood that in a prior communications protocol, a downlink subframe is used only for downlink transmission, whereas in this embodiment of the present invention, by means of pre-configuration, the user equipment is allowed to send, to the base station, an uplink signal in the downlink subframe for uplink signal sending.

Optionally, the user equipment sends, to the base station, the uplink signal in the last one or more symbols in the downlink subframe for uplink signal sending, as shown in FIG. 5. It should be understood that the downlink subframe is still mainly used for downlink transmission, and therefore, in this embodiment of the present invention, only the last several symbols in the downlink subframe are configured to send the uplink signal. In this way, the downlink subframe still has a majority of symbols for downlink transmission, preventing a loss of downlink transmission.

It should be understood that, for a manner of selecting the downlink subframe for uplink signal sending (that is, a target downlink subframe shown in FIG. 5), refer to the solution described in the embodiment shown in FIG. 3 for increasing special subframes compared with the prior art (that is, a solution changing a downlink subframe in the prior art to a special frame). Details are not repeated herein.

S204: The base station implements transmission of the uplink signal according to the radio frame configuration information, in the downlink subframe for uplink signal sending. Specifically, the base station receives the uplink signal that is sent, in the downlink subframe for uplink signal sending, by the user equipment according to the radio frame configuration information.

Optionally, at least one uplink subframe in the radio frame carries a sounding signal. Still optionally, the uplink signal carries a sounding signal. Correspondingly, after receiving the uplink signal that is sent, in the downlink subframe for uplink signal sending, by the user equipment according to the radio frame configuration information, the base station obtains a downlink channel state according to the sounding signal carried in the radio frame. It can be learned that, in this embodiment of the present invention, a quantity of subframes in which a sounding signal can be sent in the radio frame increases compared with that in a prior-art radio frame. This reduces a sounding signal sending interval, makes obtaining of the downlink channel state timelier, and therefore improves performance of radio transmission.

It should be noted that, to reserve a symbol for uplink signal sending in the downlink subframe, during downlink transmission, downlink data, for example, a physical downlink shared channel (Physical Downlink Shared Channel, PDSCH), is not mapped to a resource element corresponding to the symbol, or downlink data mapped to a resource element corresponding to the symbol is punctured. Mapping means placing logical data into a resource element, for example, placing audio data into a resource element. Puncturing means invalidating logical data mapped to a resource element.

It can be learned from the foregoing that, in this embodiment of the present invention, the user equipment and the base station implement transmission of the radio frame, and the radio frame includes the downlink subframe for uplink signal sending. In this way, a quantity of subframes used for uplink transmission can be increased in the radio frame, and the sounding signal sending interval can be reduced. This makes obtaining of the downlink channel state timelier, and therefore improves performance of radio transmission.

FIG. 6 is a schematic structural diagram of a wireless network device according to an embodiment of the present invention. The wireless network device may be the base station in the radio frame transmission method described with reference to FIG. 3, or may be the user equipment in the radio frame transmission method described with reference to FIG. 3. As shown in the figure, the wireless network device in this embodiment of the present invention may include at least an information determining module 310 and a radio frame transmission module 320.

The information determining module 310 is configured to determine radio frame configuration information.

The radio frame configuration information is used to indicate subframe types respectively allocated to 10 subframes in a radio frame, where the subframe types include uplink subframe, downlink subframe, and special subframe.

Specifically, if the wireless network device is a base station, the information determining module 310 is configured to determine the radio frame configuration information, and send the radio frame configuration information to user equipment; or if the wireless network device is user equipment, the information determining module 310 is further configured to receive the radio frame configuration information sent by a base station.

The radio frame transmission module 320 is configured to implement uplink transmission of a radio frame according to the radio frame configuration information.

Specifically, if the wireless network device is a base station, the radio frame transmission module 320 is configured to send the radio frame to the base station according to the radio frame configuration information; or if the wireless network device is user equipment, the radio frame transmission module 320 is configured to receive the radio frame sent according to the radio frame configuration information by the user equipment.

In an optional implementation, the second and the seventh subframes in the radio frame are the special subframes. The third, the fourth, the fifth, the eighth, the ninth, and the tenth subframes in the radio frame are uplink subframes, and the first and/or the sixth subframes/subframe are/is the special subframes/subframe; or the third, the fourth, the eighth, and the ninth subframes in the radio frame are uplink subframes, and at least one of the first, the fifth, the sixth, or the tenth subframe is the special subframe; or the third and the eighth subframes in the radio frame are uplink subframes, and at least one of the first, the fourth, the fifth, the sixth, the ninth, or the tenth subframe is the special subframe; or the third, the fourth, the fifth, the eighth, and the ninth subframes in the radio frame are uplink subframes, and at least one of the first, the sixth, or the tenth subframe is the special subframe.

Still optionally, at least one of the special subframes in the radio frame carries a sounding signal.

Yet optionally, the special subframes in the radio frame have at least two different configurations, and the configuration of the special subframe reflects a quantity of downlink pilot timeslots and a quantity of uplink pilot timeslots in the special subframe.

Further, a configuration of a special subframe other than the second and the seventh subframes in the radio frame is 12 downlink pilot timeslots and one uplink pilot timeslot.

Still further, the configuration of the special subframe other than the second and the seventh subframes in the radio frame is predefined, or is configured by using a system message or higher layer signaling, or is configured by using radio resource control layer signaling.

Optionally, the radio frame is configured by using a system message or higher layer signaling. In another optional implementation, the second subframe in the radio frame is the special sub frame. Only the third, the fourth, and the fifth subframes in the radio frame are uplink subframes, and at least one of the first, the sixth, the seventh, the eighth, the ninth, or the tenth subframe is the special subframe; or only the third and the fourth subframes in the radio frame are uplink subframes, and at least one of the first, the fifth, the sixth, the seventh, the eighth, the ninth, or the tenth subframe is the special subframe; or only the third subframe in the radio frame is the uplink subframe, and at least one of the first, the fourth, the fifth, the sixth, the seventh, the eighth, the ninth, or the tenth subframe is the special subframe.

Optionally, at least one of the special subframes in the radio frame carries a sounding signal. Still optionally, the special subframes in the radio frame have at least two different configurations, and the configuration of the special subframe reflects a quantity of downlink pilot timeslots and a quantity of uplink pilot timeslots in the special subframe.

Further, a configuration of a special subframe other than the second frame in the radio frame is 12 downlink pilot timeslots and one uplink pilot timeslot.

Still further, the configuration of the special subframe other than the second frame in the radio frame is predefined, or is configured by using a system message or higher layer signaling, or is configured by using radio resource control layer signaling.

Optionally, the radio frame is configured by using a system message or higher layer signaling. It should be noted that the foregoing is merely a brief description of the wireless network device in this embodiment of the present invention. For details about a specific implementation process, an implementation, and an example, refer to the embodiment described with reference to FIG. 3, and details are not repeated herein.

The wireless network device in this embodiment of the present invention may alternatively be the base station in the radio frame transmission method described with reference to FIG. 4, or may alternatively be the user equipment in the radio frame transmission method described with reference to FIG. 4. In this implementation:
The information determining module 310 is configured to determine radio frame configuration information.

The radio frame configuration information is used to indicate subframe types respectively allocated to 10 subframes in a radio frame, where the subframe types include uplink subframe, downlink subframe, and special subframe. The radio frame configuration information further includes information that indicates a downlink subframe for uplink signal sending.

Specifically, if the wireless network device is a base station, the information determining module 310 determines radio frame configuration information, and sends the radio frame configuration information to user equipment; or if the wireless network device is user equipment, the information determining module 310 receives radio frame configuration information sent by a base station.

The radio frame transmission module 320 is configured to implement transmission of an uplink signal according to the radio frame configuration information, in the downlink subframe for uplink signal sending.

Specifically, if the wireless network device is a base station, the radio frame transmission module 320 is configured to send a radio frame to the base station according to the radio frame configuration information; or if the wireless network device is user equipment, the radio frame transmission module 320 is configured to receive a radio frame sent according to the radio frame configuration information by the user equipment.

Optionally, the uplink signal includes a sounding signal.

Further optionally, if the wireless network device is a base station, the radio frame transmission module 320 is specifically configured to receive the uplink signal that is sent, in the last one or more symbols in the downlink subframe for uplink signal sending, by the user equipment according to the radio frame configuration information; or if the wireless network device is user equipment, the radio frame transmission module 320 is specifically configured to send the uplink signal to the base station in the last one or more symbols in the downlink subframe according to the radio frame configuration information.

Still optionally, downlink data is not mapped to a resource element corresponding to the symbol used to send the uplink signal in the downlink subframe for uplink signal sending. Yet optionally, downlink data mapped to a resource element corresponding to the symbol used to send the uplink signal in the downlink subframe for uplink signal sending is punctured. Still yet optionally, the downlink subframe for uplink signal sending is configured by using a system message or higher layer signaling.

It should be noted that the foregoing is merely a brief description of the wireless network device in this embodiment of the present invention. For details about a specific implementation process, an implementation, and an example, refer to the embodiment described with reference to FIG. 4, and details are not repeated herein.

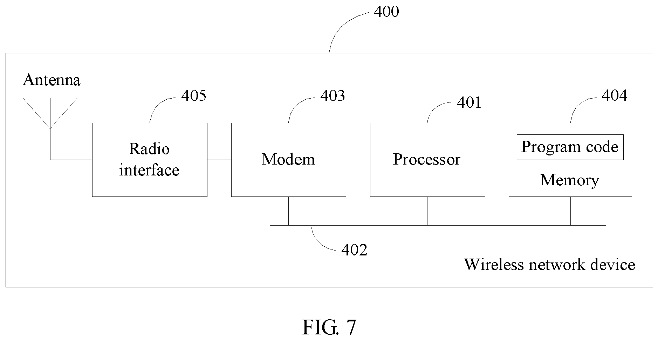

FIG. 7 is a schematic structural diagram of another wireless network device according to an embodiment of the present invention. The wireless network device may be the base station in the radio frame transmission method described with reference to FIG. 3, or may be the user equipment in the radio frame transmission method described with reference to FIG. 3. As shown in FIG. 7, the wireless network device may include at least one processor 401, such as a CPU, at least one communications bus 402, at least one modem 403, a memory 404, and a radio interface 405. The communications bus 402 is configured to implement connection and communication between these components. The radio interface 405 is configured for signaling or data communication with another node device. The memory 404 may be a high-speed RAM memory, or may be a non-volatile memory (non-volatile memory), for example, at least one magnetic disk memory. Optionally, the memory 404 may alternatively be at least one storage apparatus located far away from the processor 401. The memory 404 stores a set of program code, and the processor 401 is configured to invoke the program code stored in the memory 404 to perform the following operations:
determining radio frame configuration information; and
implementing uplink transmission of a radio frame according to the radio frame configuration information, where
the radio frame includes at least three special subframes, or
the radio frame includes 10 subframes from the first to the tenth, and the second subframe in the radio frame is the special subframe, where
only the third, the fourth, and the fifth subframes in the radio frame are uplink subframes, and at least one of the first, the sixth, the seventh, the eighth, the ninth, or the tenth subframe is the special subframe; or
only the third and the fourth subframes in the radio frame are uplink subframes, and at least one of the first, the fifth, the sixth, the seventh, the eighth, the ninth, or the tenth subframe is the special subframe; or
only the third subframe in the radio frame is the uplink subframe, and at least one of the first, the fourth, the fifth, the sixth, the seventh, the eighth, the ninth, or the tenth subframe is the special subframe.

Alternatively, the processor 401 is configured to invoke the program code stored in the memory 404 to perform the following operations:
determining radio frame configuration information; and
implementing transmission of an uplink signal in a downlink subframe for uplink signal sending according to the radio frame configuration information.

Optionally, if the wireless network device is a base station, a specific operation of the determining radio frame configuration information by the processor 401 is: determining the radio frame configuration information, and sending the radio frame configuration information to user equipment; or if the wireless network device is user equipment, a specific operation of the determining radio frame configuration information by the processor 401 is: receiving the radio frame configuration information sent by a base station.

Still optionally, if the wireless network device is a base station, a specific operation of the implementing uplink transmission of a radio frame by the processor 401 according to the radio frame configuration information is: sending the radio frame to the base station according to the radio frame configuration information; or if the wireless network device is user equipment, a specific operation of the implementing uplink transmission of a radio frame by the processor 401 according to the radio frame configuration information is: receiving the radio frame sent according to the radio frame configuration information by the user equipment.

Still optionally, if the wireless network device is a base station, a specific operation of the implementing transmission of an uplink signal by the processor 401 in the downlink subframe for uplink signal sending according to the radio frame configuration information is: sending the uplink signal to the base station in the downlink subframe for uplink signal sending according to the radio frame configuration information; or if the wireless network device is user equipment, a specific operation of the implementing transmission of an uplink signal by the processor 401 in the downlink subframe for uplink signal sending according to the radio frame configuration information is: receiving the uplink signal that is sent, in the downlink subframe for uplink signal sending, by the user equipment according to the radio frame configuration information.

An embodiment of the present invention further provides a communications system, including a first wireless network device and/or a second wireless network device. The first wireless network device may be the base station in the foregoing embodiments, and the second wireless network device may be the user equipment in the foregoing embodiments. Optionally, the first wireless network device and the second wireless network device may further be a base station and another base station, or user equipment and another user equipment.

The first wireless network device is configured to send radio frame configuration information to the second wireless network device.

The second wireless network device is configured to receive the radio frame configuration information sent by the first wireless network device, and send a radio frame to the first wireless network device according to the radio frame configuration information.

The first wireless network device is further configured to receive the radio frame sent according to the radio frame configuration information by the second wireless network device.

Optionally, the radio frame includes at least three special subframes.

Alternatively, optionally, the radio frame includes 10 subframes from the first to the tenth, and the second subframe in the radio frame is the special subframe, where
only the third, the fourth, and the fifth subframes in the radio frame are uplink subframes, and at least one of the first, the sixth, the seventh, the eighth, the ninth, or the tenth subframe is the special subframe; or
only the third and the fourth subframes in the radio frame are uplink subframes, and at least one of the first, the fifth, the sixth, the seventh, the eighth, the ninth, or the tenth subframe is the special subframe; or
only the third subframe in the radio frame is the uplink subframe, and at least one of the first, the fourth, the fifth, the sixth, the seventh, the eighth, the ninth, or the tenth subframe is the special subframe.

For a specific description, refer to the description in the foregoing embodiments, and details are not repeated herein.

Alternatively, the first wireless network device is configured to send radio frame configuration information to the second wireless network device;
the second wireless network device is configured to receive the radio frame configuration information sent by the first wireless network device, and send an uplink signal to the first wireless network device in the downlink subframe for uplink signal sending according to the radio frame configuration information; and
the first wireless network device is further configured to receive the uplink signal that is sent, in the downlink subframe for uplink signal sending, by the second wireless network device according to the radio frame configuration information.

For a specific description, refer to the description in the foregoing embodiments, and details are not repeated herein.

It can be learned from the foregoing that, in this embodiment of the present invention, the user equipment and the base station implement transmission of the radio frame, and the radio frame includes at least three special subframes, or the radio frame includes at least two special subframes, or the radio frame includes the downlink subframe for uplink signal sending. In this way, a quantity of subframes used for uplink transmission can be increased in the radio frame.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM). What is disclosed above is merely example embodiments of the present invention, and certainly is not intended to limit the protection scope of the present invention.

## Claims

1. A radio frame transmission method, wherein the method comprises:
determining radio frame configuration information; and
performing uplink transmission of a radio frame according to the radio frame configuration information, wherein the radio frame comprises at least three special subframes, and the special subframe is both capable of uplink transmission and downlink transmission, wherein all of the special subframes and uplink subframes in the radio frame carry a sounding signal,
wherein the radio frame comprises 10 subframes from the first to the tenth, and the second and the seventh subframes in the radio frame are the special subframes, wherein
the third, the fourth, the fifth, the eighth, the ninth, and the tenth subframes in the radio frame are uplink subframes, and the first or the sixth subframe is the special subframe or the first and the sixth subframe are the special subframes; or
the third, the fourth, the eighth, and the ninth subframes in the radio frame are uplink subframes, and at least one of the first, the fifth, the sixth, or the tenth subframe is the special subframe; or
the third and the eighth subframes in the radio frame are uplink subframes, and at least one of the first, the fourth, the fifth, the sixth, the ninth, or the tenth subframe is the special subframe; or
the third, the fourth, the fifth, the eighth, and the ninth subframes in the radio frame are uplink subframes, and at least one of the first, the sixth, or the tenth subframe is the special subframe.

2. The method according to claim 1, wherein the special subframes in the radio frame have at least two different configurations, and the configuration of the special subframe reflects a quantity of downlink pilot timeslots and a quantity of uplink pilot timeslots in the special subframe.

3. The method according to any one of claims 1 or 2, wherein a configuration of a special subframe other than the second and the seventh subframes in the radio frame is 12 downlink pilot timeslots and one uplink pilot timeslot.

4. The method according to any one of claims 1 to 3, wherein the configuration of the special subframe other than the second and the seventh subframes in the radio frame is predefined, or is configured by using a system message or higher layer signaling, or is configured by using radio resource control layer signaling.

5. A wireless network device (400), wherein the wireless network device (400) comprises means configured to implement actions in a method in accordance with any one of claims 1 to 4.

6. The wireless network device (400) according to claim 5, wherein the wireless network device (400) is a base station or user equipment.

## Patentansprüche

1. Funkframeübertragungsverfahren, wobei das Verfahren Folgendes umfasst:
Bestimmen von Funkframekonfigurationsinformationen; und
Durchführen von Uplink-Übertragung eines Funkframes gemäß den Funkframekonfigurationsinformationen, wobei der Funkframe mindestens drei spezielle Subframes umfasst und der spezielle Subframe sowohl zu Uplink-Übertragung als auch zu Downlink-Übertragung fähig ist,
wobei alle der speziellen Subframes und Uplink-Subframes in dem Funkframe ein Sondierungssignal führen,
wobei der Funkframe 10 Subframes, von dem ersten zu dem zehnten, umfasst und der zweite und der siebte Subframe in dem Funkframe spezielle Subframes sind, wobei der dritte, der vierte, der fünfte, der achte, der neunte und der zehnte Subframe in dem Funkframe Uplink-Funkframes sind, und der erste oder der sechste Subframe der spezielle Subframe ist oder der erste und der sechste Subframe die speziellen Subframes sind; oder
der dritte, der vierte, der achte und der neunte Subframe in dem Funkframe Uplink-Subframes sind, und mindestens einer des ersten, des fünften, des sechsten oder des zehnten Subframes der spezielle Subframe ist; oder
der dritte und der achte Subframe in dem Funkframe Uplink-Subframes sind, und mindestens einer des ersten, des vierten, des fünften, des sechsten, des neunten oder des zehnten Subframes der spezielle Subframe ist; oder
der dritte, der vierte, der fünfte, der achte und der neunte Subframe in dem Funkframe Uplink-Subframes sind, und mindestens einer des ersten, des sechsten oder des zehnten Subframes der spezielle Subframe ist.

2. Verfahren nach Anspruch 1, wobei die speziellen Subframes in dem Funkframe mindestens zwei verschiedene Konfigurationen aufweisen und die Konfiguration des speziellen Subframes eine Anzahl von Downlink-Pilotzeitschlitzen und eine Anzahl von Uplink-Pilotzeitschlitzen in dem speziellen Subframe wiedergeben.

3. Verfahren nach einem der Ansprüche 1 oder 2, wobei eine Konfiguration eines speziellen Subframes, der ein anderer als der zweite und der siebte Subframe in dem Funkframe ist, 12 Downlink-Pilotzeitschlitze und ein Uplink-Pilotzeitschlitz ist.

4. Verfahren nach einem der Ansprüche 1 bis 3, wobei die Konfiguration des speziellen Subframes, der ein anderer als der zweite und der siebte Subframe in dem Funkframe ist, vordefiniert ist oder unter Verwendung einer Systemnachricht oder höherer Schichtsignalisierung konfiguriert wird oder unter Verwendung einer Funkressourcensteuerungsschichtsignalisierung konfiguriert wird.

5. Drahtlosnetzvorrichtung (400), wobei die Drahtlosnetzvorrichtung (400) Mittel umfasst, die ausgelegt sind zum Implementieren von Handlungen in einem Verfahren nach einem der Ansprüche 1 bis 4.

6. Drahtlosnetzvorrichtung (400) nach Anspruch 5, wobei die Drahtlosnetzvorrichtung (400) eine Basisstation oder ein Benutzergerät ist.

## Revendications

1. Procédé de transmission de trame radio, le procédé comprenant :
la détermination d'informations de configuration de trame radio ; et
la réalisation d'une transmission en liaison montante d'une trame radio selon les informations de configuration de trame radio, la trame radio comprenant au moins trois sous-trames spéciales, et la sous-trame spéciale étant apte à la fois à la transmission en liaison montante et à la transmission en liaison descendante,
la totalité des sous-trames spéciales et des sous-trames de liaison montante dans la trame radio transportant un signal de sondage,
la trame radio comprenant 10 sous-trames de la première à la dixième, et la deuxième et la septième sous-trames dans la trame radio étant les sous-trames spéciales,
la troisième, la quatrième, la cinquième, la huitième, la neuvième et la dixième sous-trames dans la trame radio étant des sous-trames de liaison montante, et la première ou la sixième sous-trame étant la sous-trame spéciale ou la première et la sixième sous-trame étant les sous-trames spéciales ; ou
la troisième, la quatrième, la huitième et la neuvième sous-trames dans la trame radio étant des sous-trames de liaison montante, et au moins une sous-trame parmi la première, la cinquième, la sixième et la dixième sous-trames étant la sous-trame spéciale ; ou
la troisième et la huitième sous-trames dans la trame radio étant des sous-trames de liaison montante, et au moins une sous-trame parmi la première, la quatrième, la cinquième, la sixième, la neuvième et la dixième sous-trames étant la sous-trame spéciale ; ou
la troisième, la quatrième, la cinquième, la huitième et la neuvième sous-trames dans la trame radio étant des sous-trames de liaison montante, et au moins une sous-trame parmi la première, la sixième et la dixième sous-trames étant la sous-trame spéciale.

2. Procédé selon la revendication 1, dans lequel les sous-trames spéciales dans la trame radio ont au moins deux configurations différentes, et la configuration de la sous-trame spéciale reflète une quantité d'intervalles de temps pilotes de liaison descendante et une quantité d'intervalles de temps pilotes de liaison montante dans la sous-trame spéciale.

3. Procédé selon l'une quelconque des revendications 1 ou 2, dans lequel une configuration d'une sous-trame spéciale autre que la deuxième et la septième sous-trames dans la trame radio est 12 intervalles de temps pilotes de liaison descendante et un intervalle de temps pilote de liaison montante.

4. Procédé selon l'une quelconque des revendications 1 à 3, dans lequel la configuration de la sous-trame spéciale autre que la deuxième et la septième sous-trames dans la trame radio est prédéfinie, ou est configurée en utilisant un message système ou une signalisation de couche plus haute, ou est configurée en utilisant une signalisation de couche de commande de ressource radio.

5. Dispositif de réseau sans fil (400), le dispositif de réseau sans fil (400) comprenant des moyens configurés pour mettre en œuvre des actions dans un procédé conformément à une quelconque des revendications 1 à 4.

6. Dispositif de réseau sans fil (400) selon la revendication 5, le dispositif de réseau sans fil (400) étant une station de base ou un équipement utilisateur.
